## Europäisches Patentamt

## European Patent Office

## Office européen des brevets

(19)

(11) Veröffentlichungsnummer: **0 025 913**
**A2**

(12) **EUROPÄISCHE PATENTANMELDUNG**

(21) Anmeldenummer: **80105260.6**

(22) Anmeldetag: **04.09.80**

(51) Int. Cl.³: **B 60 T 17/22**

(30) Priorität: **21.09.79 DE 2938344**

(43) Veröffentlichungstag der Anmeldung:
**01.04.81 Patentblatt 81/13**

(84) Benannte Vertragsstaaten:
**CH DE FR GB IT LI**

(71) Anmelder: **Knorr-Bremse GmbH**
**Moosacher Strasse 80**
**D-8000 München 40(DE)**

(72) Erfinder: **Schirmer, Klaus**
**Mitterweg 14**
**D-8031 Olching(DE)**

(72) Erfinder: **Forster, Klaus**
**Schäftlarnstrasse 74**
**D-8000 München 70(DE)**

(54) Sicherheitsschaltung zur Überwachung von Magnetventilen von Fahrzeugen.

(57) Sicherheitsschaltung zur Überwachung von Magnetventilen von Fahrzeugen, insbesondere von Bremsmagnetventilen, die über eine von einem Prozessor gesteuerte Ansteuerungseinrichtung betätigt werden. Die Ansteuerungseinrichtung weist mindestens einen Schalter auf, der einen Anschluß des Magnetventils mit einem Pol einer Versorgungsspannungsquelle verbindet. Dabei ist erstens eine Spannungsmeßeinrichtung (10) vorgesehen, die ständig das Vorhandensein eines Spannungsabfalles an dem Magnetventil (1) erfaßt und ein Spannungssignal (U) erzeugt. Zweitens ist eine im Strompfad des Magnetventils (1) liegende Strommßeinrichtung (8) vorgesehen, die ein Stromsignal (I) erzeugt und drittens sind mindestens zwei im Strompfad des Magnetventils (1) liegende PTC-Widerstände (6,7) vorgesehen, von denen der eine in der Stromzuleitung und der andere in der Stromrückleitung liegt. Besonders vorteilhaft ist es, wenn zusätzlich eine durch das Spannungssignal (U) betätigte Einrichtung (25 - 29) vorgesehen ist, die bei Abwesenheit eines Spannungsabfalles an dem Mangnetventil den Schalter (4, 4') öffnet bzw. geöffnet hält. Gemäß einer Ausführung kann der Ausgang der Strömmeßeinrichtung (8) von dem Magnetventil (1) galvanisch getrennt sein.

./...

EP 0 025 913 A2

Fig. 2

KNORR-BREMSE GMBH
Moosacher Straße 80
8000 München 40

München, 13.9.1979
TP1/Dr.v.Bü/so
-1588-

"Sicherheitsschaltung zur Überwachung
von Magnetventilen von Fahrzeugen"

Die Erfindung bezieht sich auf eine Sicherheitsschaltung zur Überwachung von Magnetventilen von Fahrzeugen, insbesondere von Bremsmagnetventilen, die über eine von einem Prozessor gesteuerte Ansteuerungseinrichtung betätigt werden, wobei die Ansteuerungseinrichtung mindestens einen Schalter aufweist, der einen Anschluß des Magnetventiles mit einem Pol einer Versorgungsspannungsquelle verbindet.

Derartige Sicherheitsschaltungen wurden von der Anmelderin hergestellt. Sie finden insbesondere bei blockiergeschützten Bremsanlagen Verwendung, wobei unter "Prozessor" jegliche Schaltung zu verstehen ist, die in Abhängigkeit von bestimmten Meß- oder Steuersignalen bestimmte Steuersignale zur Betätigung von Magnetventilen erzeugt. Diese bekannten Sicherheitsschaltungen enthalten Schmelzsicherungen, die bei Kurzschluß am Magnetventil den Stromkreis unterbrechen und das Magnetventil und die es ansteuernden Schaltungen vor Zerstörung schützen.

Nachteilig an diesen bekannten Sicherheitsschaltungen ist folgendes: Bei Fortfall des Kurzschlusses ist das Magnetventil erst nach Auswechseln der Schmelzsicherung wieder betriebsbereit. Insbesondere bei "intermittierenden" Kurzschlüssen, wie sie z.B. durch Wasser in Schaltkästen verursacht werden, ist das Magnetventil unnötig lange außer Betriebsbereitschaft.

2

Es können nur bestimmte Fehler, wie Kurzschlüsse, erkannt werden.

Aufgabe der vorliegenden Erfindung ist es daher, eine Sicherheitsschaltung der oben genannten Art zu schaffen, die sämtliche möglichen Fehler eines Magnetventiles erkennt, das Magnetventil vor Zerstörungen schützt und es nach Fortfall der Störung selbsttätig wieder einsatzbereit macht.

Diese Aufgabe wird erfindungsgemäß dadurch gelöst, daß eine Spannungsmeßeinrichtung vorgesehen ist, die ständig das Vorhandensein eines Spannungsabfalles an dem Magnetventil erfaßt und ein Spannungssignal erzeugt, daß eine im Strompfad des Magnetventils liegende Strommeßeinrichtung vorgesehen ist, die ein Stromsignal erzeugt und daß mindestens zwei im Strompfad des Magnetventils liegende PTC-Widerstände vorgesehen sind, von denen der eine in der Stromzuleitung und der andere in der Stromrückleitung liegt.

Hierdurch wird erreicht, daß die möglichen Fehler des Magnetventils, wie Kurzschluß, Masseschluß, Leitungsunterbrechung erkannt werden, wobei die PTC-Widerstände (Widerstände mit positivem Temperaturkoeffizienten) einen möglichen Kurzschlußstrom auf einen Wert begrenzen, der so klein ist, daß das Magnetventil, Zuleitungen oder Bauteile von Ansteuerschaltungen nicht zerstört werden können.

Nach einer vorteilhaften Weiterbildung der Erfindung ist eine durch das Spannungssignal betätigte Einrichtung vorgesehen, die bei Abwesenheit eines Spannungsabfalles an dem Magnetventil den Schalter öffnet bzw. geöffnet hält. Hierdurch wird gewährleistet, daß das Magnetventil bei Vorliegen eines Kurzschlusses bzw. von Masseschlüssen verzögert abgeschaltet wird und, solange dieser Fehler vorliegt, nicht erneut eingeschaltet werden kann.

Dieses erneute Wiedereinschalten wird dadurch verhindert, daß die Überwachung des Spannungsabfalls auch bei abgeschaltetem Magnetventil wirksam ist, da über zwei parallel zu den Schaltern liegende Wiederstände auch bei geöffneten Schaltern ein Ruhestrom fließt, der den

- 3 -

3

zu erfassenden Spannungsabfall an dem Magnetventil erzeugt.

Weitere vorteilhafte Ausgestaltungen der Erfindung bestehen darin, daß die Spannungsmeßeinrichtung bzw. die Strommeßeinrichtung ausgangsseitig gegenüber dem Magnetventil galvanisch getrennt sind, so daß Störungen auf der Magnetventilversorgung keinen Einfluß auf die prozessorseitigen Schaltungsteile haben. Hierzu enthält die Spannungsmeßeinrichtung einen Optokoppler und die Strommeßeinrichtung ein Reed-Relais.

Nach einer weiteren vorteilhaften Ausgestaltung der Erfindung sind zwei Reed-Relais vorgesehen, von denen das eine in der Stromzuleitung und das andere in der Stromrückleitung liegt. Die Ausgänge der einen Stromfluß anzeigenden Reed-Kontakte sind hierbei über eine logische ODER-Verknüpfung miteinander verbunden. Hierdurch können bestimmte Masseschlüsse des Magnetventiles lokalisiert werden und bei für die Funktionsfähigkeit des Magnetventiles unschädlichen Masseschlüssen ein normaler Betrieb des Magnetventiles aufrechterhalten werden.

Weitere vorteilhafte Ausgestaltungen und Weiterbildungen der Erfindung sind den Unteransprüchen zu entnehmen.

Zusammenfassend schafft die vorliegende Erfindung eine Sicherheitsschaltung zur Überwachung von Magnetventilen von Fahrzeugen, bei der ständig, also auch bei nichterregtem Magnetventil, ein Spannungsabfall an dem Magnetventil gemessen und ausgewertet wird. In Abhängigkeit dieser Auswertung werden bestimmte Fehlerarten erkannt, und bei Vorliegen eines Fehlers wird das Magnetventil verzögert/abgeschaltet und ein erneutes Einschalten verhindert, bis der Fehler beseitigt ist. Weiterhin wird durch Verwendung von PTC-Widerständen ein möglicher Kurzschlußstrom auf technisch vertretbare Werte begrenzt. Schließlich wird bei erregtem Magnetventil der durch das Magnetventil fließende Strom überwacht und ausgewertet, wobei bei bestimmten Fehlern ebenfalls eine Abschaltung des Magnetventiles

- 4 -

4

erfolgt, wobei bei anderen Fehlern dem Prozessor gemeldet wird, daß das Magnetventil nicht einsatzbereit ist. Die Verwendung von Reed-Relais schafft eine zuverlässige, zerstörungssichere Meßschaltung für den Magnetventilstrom und eine galvanisch getrennte Signalübertragung. Die Verwendung des bzw. der PTC-Widerstände als Sicherungselement bringt einen sicheren Schutz bei Kurzschlußströmen, wobei der PTC-Widerstand aufgrund seines steigenden Widerstandes bei größerer Belastung ebenfalls unzerstörbar ist. Die Reaktionszeit ist kurz genug, um Zerstörungen von Leiterbahnen oder ähnlichem zu verhindern. Bei Wegfall des Kurzschlusses kann nach kurzer Zeit der Normalbetrieb automatisch wieder aufgenommen werden.

Im Folgenden wird die Erfindung anhand eines Ausführungsbeispieles im Zusammenhang mit den Figuren ausführlicher erläutert. Es zeigt:

Figur 1    ein Blockschaltbild der erfindungsgemäßen Sicherheitsschaltung und

Figur 2    ein detailliertes Schaltbild einer Ausführungsform der erfindungsgemäßen Sicherheitsschaltung.

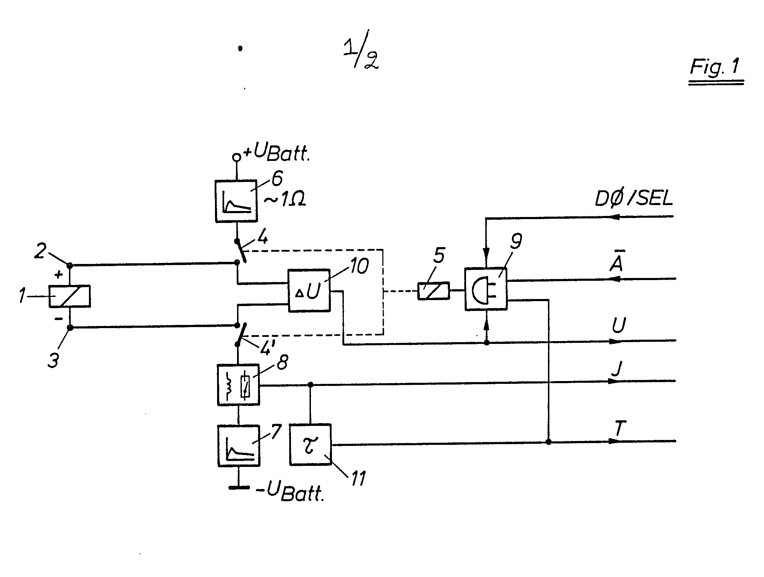

In Figur 1 ist ein Magnetventil 1 mit einem positiven Anschluß 2 und einem negativen Anschluß 3 dargestellt. Jedem dieser Anschlüsse ist ein Schaltkontakt 4 bzw. 4' zugeordnet, die gemeinsam über ein Relais 5 betätigt werden. Zwischen einem Anschluß für positive Batteriespannung und dem Schalter 4 ist ein PTC-Widerstand 6 geschaltet. Zwischen einem negativen Batterieanschluß und dem Anschluß des Schalters 4' liegt eine Reihenschaltung aus einem weiteren PTC-Widerstand 7 und einem Reed-Relais 8. Die PTC-Widerstände 6 und 7 besitzen die in Fig. 1 dargestellte Strom-Spannungs-Charakteristik. Diese Widerstände besitzen einen positiven Temperaturkoeffizienten und sind in der Druckschrift "Siemens, Bauteilereport 3/79", Seite 125 ff., beschrieben.

5

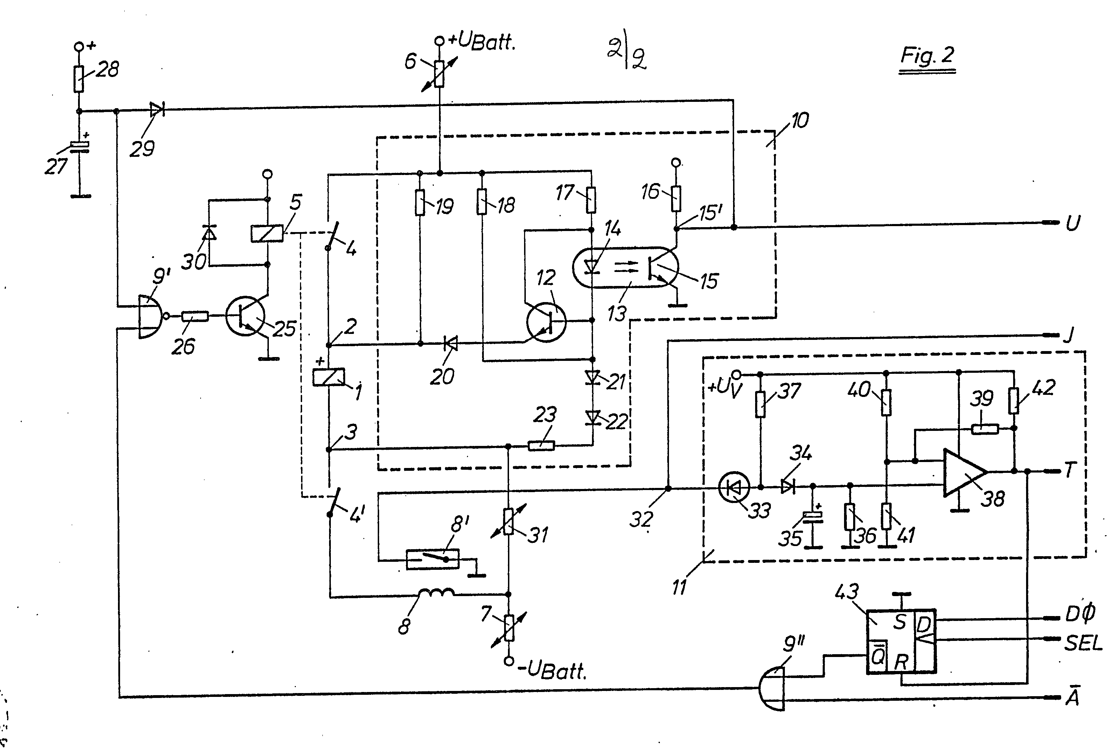

Das die Schalter 4 und 4' betätigende Relais 5 wird über eine Logikschaltung 9 angesteuert. Diese Logikschaltung verknüpft mehrere Signale (Freigabesignale DO/SEL, Ansteuerungssignale $\overline{A}$, Kurzschlußsignale U und Zeitüberwachungssignale T). Weitere Einzelheiten werden im Zusammenhang mit der Funktionsbeschreibung der Figur 2 erläutert.

Parallel zu dem Magnetventil 1 ist eine Spannungsüberwachungsschaltung 1o geschaltet, die bei bestimmten Störungen am Magnetventil 1 das Kurzschlußsignal U abgibt.

Die Spannungsüberwachungsschaltung 10 liefert auch bei geöffneten Schaltern 4 bzw. 4' einen geringen Ruhestrom zu dem Magnetventil 1 und überwacht daher den Spannungsabfall an dem Magnetventil unabhängig vom Schaltzustand der Schalter 4 und 4'.

Bei geschlossenen Schaltern 4 und 4' fließt ein Strom von der positiven Spannungsversorgung $+U_{Batt}$ durch den PTC-Widerstand 6, den Schalter 4, das Magnetventil 1, die Wicklung des Reed-Relais 8 und den PTC-Widerstand 7 zum Anschluß für die negative Batteriespannung $-U_{Batt}$.

Im Falle einer Leitungsunterbrechung fließt durch die Wicklung des Reed-Relais 8 kein Strom, so daß der Schaltkontakt des Reed-Relais 8 geöffnet ist, was das Leerlaufsignal I zu dem Prozessor liefert. Hieraus erkennt der Prozessor bei gleichzeitig betätigten Schaltern 4 und 4' und vorhandenem Signal U das Vorliegen einer Unterbrechung. Das Signal I wird weiterhin zu einer Zeitüberwachungsschaltung 11 geliefert, die dann das Zeitüberwachungssignal T erzeugt, wenn der Schaltkontakt des Reed-Relais für eine einstellbare Zeitdauer geschlossen war, was einen Fehler des Prozessors anzeigt, da ein normaler Bremslöse- bzw. Regelvorgang stets unterhalb der einstellbaren Zeitdauer liegen soll. Weiterhin wird das Zeitüberwachungssignal T der Logikschaltung 9 zugeführt und sorgt für ein Abfallen des Relais 5 und damit für ein Abschalten des Magnetventiles 1. Die PTC-Widerstände 6 und 7 sorgen für eine Strombegrenzung im Kurzschlußfalle und sind so dimensioniert, daß der Strom auf einen solchen Wert

6

begrenzt wird, daß Zerstörungen von Leitungen oder Leiterbahnen vermieden werden.

Die Logikschaltung 9 verknüpft die genannten Signale über eine UND-Bedingung (ODER bzw. NOR für negative Logik) so, daß die Schalter 4 nur dann geschlossen sind, wenn die Freigabesignale und die Ansteuerungssignale vorliegen, wenn kein Kurzschlußsignal U und kein Zeitfehlersignal T vorliegt.

In Fig. 2 sind gleiche Teile wie in Fig. 1 mit gleichen Bezugszeichen versehen. Die Verschaltung der Teile 1, 4, 4', 5, 6 und 7 ist identisch wie in Fig. 1. Zuerst sei die Spannungsüberwachungsschaltung 10 beschrieben. Parallel zu der Kollektor-Basis-Strecke eines Transistors 12 liegt eine Diode 14 eines Optokopplers 13, der einen Opto-Transistor 15 aufweist. Der Emitter dieses Optotransistors ist mit Masse und sein Kollektor mit einem Anschluß 15' verbunden. Weiterhin ist dieser Kollektor über einen Widerstand 16 mit einer Versorgungsspannung verbunden. Der Kollektor des Transistors 12 ist über einen Widerstand 17 mit einem Anschluß des PTC-Widerstandes 6 verbunden. Die Basis des Transistors 12 ist über einen Widerstand 18 mit diesem Anschluß des PTC-Widerstandes 6 verbunden, wobei dieser Anschluß über einen weiteren Widerstand 19 und eine Diode 20 mit dem Emitter des Transistors 12 verbunden ist. Der Verbindungspunkt zwischen dem Widerstand 19 und der Diode 20 ist mit dem positiven Anschluß 2 des Magnetventiles 1 verbunden. Die Basis des Transistors 12 ist über zwei in Reihe geschaltete Dioden 21 und 22 und einen hierzu in Reihe liegenden Widerstand 23 mit dem negativen Anschluß 3 des Magnetventiles 1 verbunden. Dieser Anschluß 3 ist über einen weiteren PTC-Widerstand 31 mit einem Anschluß des PTC-Widerstandes 7 verbunden.

Das die Schalter 4 und 4' betätigende Relais 5 ist mit seinem einen Anschluß mit positiver Versorgungsspannung und mit seinem anderen Anschluß mit dem Kollektor eines Transistors 25 verbunden, dessen Emitter mit Masse verbunden ist. Die Basis des Transistors 25 ist über einen Widerstand 26 mit dem Ausgang eines NOR-Gatters 9' verbunden. Ein Eingang des NOR-Gatters 9' ist mit dem gemeinsamen Verbindungspunkt eines Kondensators 27, eines Widerstandes 28 und einer Diode 29 verbunden. Der andere Anschluß des Kondensators 27 ist mit Masse verbunden, der des Widerstandes 28 mit positiver Versorgungsspannung und der der Diode 29 mit dem Ausgangsanschluß 15' des Optokopplers 13. Parallel zu den beiden Anschlüssen des Relais 5 liegt noch eine Diode 30, die Spannungsspitzen in bekannter Weise unterdrückt.

Die Wicklung 8 des Reed-Relais liegt zwischen dem Verbindungspunkt der PTC-Widerstände 7 und 31 und dem Schaltkontakt 4'. Der Schalter 8' des Reed-Relais ist mit einem Anschluß mit Masse und mit seinem anderen Anschluß mit einem Eingangsanschluß 32 der Zeitüberwachungsschaltung 11 verbunden. Der Eingangsanschluß 32 ist über zwei, gegensinnig in Reihe geschaltete Dioden 33 und 34 mit einem Anschluß eines Kondensators 35 verbunden, dessen anderer Anschluß auf Masse liegt. Parallel zu dem Kondensator 35 liegt ein Widerstand 36. Der Verbindungspunkt der Dioden 33 und 34 ist über einen Widerstand 37 mit positiver Versorgungs- spannung $+U_v$ verbunden. Der gemeinsame Verbindungspunkt der Diode 34, des Kondensators 35 und des Widerstandes 36 ist mit einem negativen Eingang eines Operationsverstärkers 38 verbunden. Der Ausgang des Operationsverstärkers 38 führt das Zeitüberwachungssignal T und ist über einen Rückkopplungswiderstand 39 mit seinem positiven Eingang zurückverbunden. Weiterhin ist der positive Eingang mit einem Verbindungspunkt zweier als Spannungsteiler ausgebildeter Widerstände 40 und 41 verbunden. Die anderen Anschlüsse dieser Widerstände sind mit der positiven Versorgungsspannung bzw. mit Masse verbunden. Der Ausgang des Operationsverstärkers 38 ist noch über einen Widerstand 42 mit positiver Batteriespannung und über eine Leitung mit einem Rücksetzeingang R eines Flip-Flops 43 verbunden. Der Setzeingang S des Flip-Flops 43 ist mit Masse verbunden, während der D- Eingang und der Trigger-Eingang über Leitungen mit dem Prozessor verbunden sind und die Freigabesignale DO bzw. SEL empfangen.

8

Der $\overline{Q}$-Ausgang des Flip-Flops 43 ist mit einem Eingang eines ODER-Gatters 9" verbunden. Der anderen Eingang des ODER-Gatters 9" ist über eine Leitung mit dem Prozessor verbunden und empfängt das invertierte Ansteuerungssignal $\overline{A}$. Der Ausgang des ODER-Gatters 9" ist mit dem anderen Eingang des NOR-Gatters 9' verbunden.

Es sei noch darauf hingewiesen, daß in einer (nicht dargestellten) Ausführungsform der Erfindung das Reed-Relais 8 auch zwischen den Anschluß 2 und den Schalter 4 bzw. den Anschluß 3 und den Schalter 4' geschaltet werden kann, wobei auch zwei Reed-Relais an den genannten Stellen gleichzeitig vorgesehen sein können.

Im Folgenden wird die Wirkungsweise der in Fig. 2 dargestellten Schaltung erläutert. Die einzelnen, am Magnetventil 1 auftretenden Fehlermöglichkeiten sind wie folgt:

a) Kurzschluß des Magnetventiles

b) Schluß des Anschlusses 2    mit negativer Batteriespannung

c) Schluß des Anschlusses 3  mit positiver Batteriespannung

d) Leitungsunterbrechung e Masseschluß des Magnetventiles bei gleichzeitigem Masseschluß eines Poles der Batteriespannung

f) "Zeitfehler".

a) Bei Kurzschluß des Magnetventiles 1 tritt kein Spannungsabfall an diesem auf. Der Emitter des Transistors 12 liegt damit auf niedrigem Potential, so daß der Transistor 12 leitend wird. Damit fließt praktisch kein Strom mehr durch die Diode 14, da der leitende Transistor 12 weitaus niederohmiger ist als die Reihenschaltung aus Diode 14 und Widerstand 23 (die beiden Dioden 21 und 22 dienen zur Kompensation der Spannungsabfälle an der Basis-Emitter-Diode des Transistors 12 und an der Diode 20. Die Diode 20 dient zur Entkopplung des Emitters des Transistors 12 gegenüber der positiven Batteriespannung).

Die Stromlosigkeit der Diode 14 führt dazu, daß der Opto-Transistor 15 sperrt, so daß sein Ausgang 15' über den Wider-

9

stand 16 auf positives Potential gebracht wird. Das Signal U ist also auf positivem Potential. Hierdurch sperrt die Diode 29, so daß der Kondensator 27 aufgeladen wird. Damit steigt dessen Spannung an, so daß in Abhängigkeit der Zeitkonstanten aus Widerstand 28 und Kondensator 27 der eine Eingang des NOR-Gatters 9' den Schaltpegel erreicht, worauf der Ausgang des NOR-Gatters 9' auf niedrigen Pegel geht, was den Transistor 25 sperrt. Damit fällt das Relais 5 ab, und die Schalter 4 und 4' öffnen. Weil der Abfall des Relais 5 zeitverzögert erfolgt, erreicht der Abschaltstrom aufgrund der PTC-Widerstände 6 und 7 keine unzulässig hohen Werte. Nach Öffnen der Schalter 4 und 4' fließt ein geringfügiger Ruhestrom über den PTC-Widerstand 6, den Widerstand 19, das Magnetventil 1, den PTC-Widerstand 31 und den PTC-Widerstand 7. Solange der Kurzschluß an dem Magnetventil 1 bestehen bleibt, ist der Ausgang 15' des Optokopplers 13 auf positivem Potential, so daß der Transistor 25 unabhängig von den Signalen am anderen Eingang des NOR-Gatters 9 stets gesperrt bleibt und die Schalter 4 nicht mehr geschlossen werden können. Bei Fortfall des Kurzschlusses tritt an dem Magnetventil 1 ein Spannungsabfall auf, so daß der Emitter des Transistors 12 auf höheres Potential gelangt und somit sperrt. Damit fließt ein Strom durch die Diode 14, der Opto-Transistor 15 wird leitend, und das Signal U an dem Anschluß 15 geht auf niedriges Potential. Hierdurch entlädt sich der Kodensator 27 schnell und der eine Eingang des NOR-Gatters 9' geht auf niedrigen Pegel, was das NOR-Gatter 9' in Bereitschaft setzt. Über das Signal $\overline{A}$ kann dann der Transistor 25 erneut leitend gemacht werden, und die Schaltung ist wieder ansprechbereit.

b) Bei einem Schluß des positiven Anschlusses 2 mit negativer Versorgungsspannung wird ebenfalls der Emitter des Transistors 12 auf niedriges Potential gezogen, so daß der gleiche Vorgang auftritt und das Signal U auf hohem Pegel ist.

c) Bei einem Schluß des negativen Anschlusses 3 des Magnetventiles 1 mit positiver Versorgungsspannung liegt an dem Verbindungspunkt der Widerstände 23 und 31 positives Potential und ebenfalls an dem Verbindungspunkt der Widerstände 6 und 17. Damit ist keine Potentialdifferenz vorhanden, die einen Strom durch die Diode 14 fließen lassen könnte. Der Opto-Transistor 15 sperrt, und das Signal U ist ebenfalls auf hohem Pegel, was die oben beschriebenen Schaltvorgänge auslöst. Bei Fortfall dieser Störung kann wieder ein Strom durch die Diode 14 fließen, und das Signal U geht auf niedriges Potential, was (mit Ausnahme der nachfolgend geschilderten Fehler) fehlerfreien Betrieb anzeigt.

d) Bei einer Leitungsunterbrechung in der Stromzufuhr des Magnetventiles 1 wird die Wicklung 8 stromlos. Der Reed-Kontakt 8' öffnet, und der Anschluß 32 geht über den Widerstand 37 und die Diode 33 auf hohes Potential. Ein hoher Pegel des Signales I zeigt damit eine Leitungsunterbrechung an, die dem Prozessor gemeldet wird.

e) Normalerweise sollte bei Schienenfahrzeugen die Fahrzeugmasse keinen Schluß mit einem der Batteriepole haben. Durch schadhafte Kabel oder Masseschluß anderer, an die Batterie angeschlossener Verbraucher, tritt ein solcher Schluß in der Praxis jedoch öfters auf. Wenn dann noch zusätzlich auch die Wicklung oder einer der Anschlüsse des Magnetventiles 1 einen Masseschluß aufweist, ist einer der oben geschilderten Fälle b) oder c) vorhanden, worauf die Schaltung, wie oben geschildert, anspricht.

Schließlich können über das Reed-Relais und die Zeitüberwachungsschaltung 11 noch Zeitfehler in der Ansteuerung durch den Prozessor erkannt werden. Bei normalem Betrieb ist das Auslaßventil einer Fahrzeugbremse höchstens für drei Sekunden betätigt und das Halteventil für höchstens 15 Sekunden. Die Zeitdauer des Stromflusses durch das Reed-Relais 8 zeigt die Zeitdauer der Erregung des Magnetventiles 1 an. Solange das Magnetventil erregt ist, ist der Reed-Kontakt 8' geschlossen und der Eingangsanschluß 32 der Zeitüberwachungsschaltung 11 auf niedrigem Potential. Die Diode 34 sperrt damit, so daß sich der Kondensator 35 über den Widerstand 36 entladen kann. Hierdurch sinkt die Spannung an dem negativen Anschluß des Operationsverstärkers 38 ab. Sobald diese Spannung den durch den Spannungsteiler 40 bzw. 41 und den Rückkopplungswiderstand 39 eingestellten Trigger-Pegel erreicht hat, schaltet der Operationsverstärker 38 durch, so daß das Zeitüberwachungssignal T auf hohen Pegel geht. Hierdurch wird das Flip-Flop 43 zurückgesetzt, und sein $\overline{Q}$-Ausgang führt positives Potential. Dieses Potential gelangt durch das ODER-Gatter 9" zu einem Eingang des NOR-Gatters 9', dessen Ausgang auf niedrigen Pegel geht, was den Transistor 25 sperrt, das Relais 5 zum Abfallen bringt und die Schalter 4 und 4' öffnet. Gleichzeitig wird der Zeitfehler über das Ausgangssignal $\overline{T}$ des Operationsverstärkers 38 dem Prozessor gemeldet. Hierauf kann dann eine Eigenprüfung des Prozessors eingeleitet werden.

Durch Öffnen der Schalter 4 und 4' wird das Magnetventil 1 und die Wicklung des Reed-Relais 8 stromlos, so daß der Reed-Kontakt 8' öffnet. Der Kondensator 35 wird über den Widerstand 37 und die Diode 34 wieder aufgeladen, und der Operationsverstärker 38 schaltet, nach Erreichen seiner Rückschaltschwelle, zurück, so daß sein Ausgang niedriges Potential führt. Das Flip-Flop 43 kann dann durch die von dem Prozessor gelieferten Freigabesignale DO bzw. SEL umschalten, so daß die Schaltung durch das Ansteuersignal $\overline{A}$ wieder gesteuert werden kann.

Der PTC-Widerstand 31 dient dazu, den Ruhestrom durch das Magnetventil 1 und damit die Verlustleistung zu begrenzen, wenn die Schalter 4 und 4' geöffnet sind. Der PTC-Widerstand 31 ist damit hochohmiger als die PTC-Widerstände 6 und 7, da der Ruhestrom ja geringer ist als der Arbeitsstrom durch das

12

Magnetventil 1.

Wie oben kurz angedeutet, besteht eine Schaltungsvariante darin, anstelle des Reed-Relais 8 zwei Reed-Relais vorzusehen, deren Wicklungen zwischen dem Anschluß 2 und dem Schalter 4 bzw. zwischen dem Anschluß 3 und dem Schalter 4' liegen. Diese Schaltungsvariante wird als bevorzugtes Ausführungsbeispiel der Erfindung angesehen. Die den beiden Wicklungen zugeordneten Reedkontakte sind jeweils mit einem Anschluß mit Masse bzw. dem Minuspol der Batterie verbunden, während ihre anderen Anschlüsse über eine ODER-Verknüpfung mit dem Anschluß 32 der Schaltung 11 verbunden sind. Die ODER-Verknüpfung kann durch ein ODER-Gatter erfolgen oder dadurch, daß die beiden Anschlüsse der beiden Reed-Kontakte direkt mit dem Anschluß 32 verbunden werden. Bei Verwendung eines ODER-Gatters werden dessen beide Eingänge bei der vorliegenden Schaltung noch über sog. Pull-up-Widerstände in bekannter Weise mit positiver Versorgungsspannung verbunden.

Der Grund für die Bevorzugung dieser Schaltungsvariante liegt in Folgendem:

Bei der Schaltung der Fig. 2 kann der Fall auftreten, daß der Anschluß 3 des Magnetventiles 1 einen Masseschluß hat und gleichzeitig der Minuspol der Stromversorgungsquelle ebenfalls einen Masseschluß hat. Bei erregtem Magnetventil fließt dann der Strom durch das Magnetventil 1 direkt über den Anschluß 3 über die Masseverbindung zu dem Minuspol der Batterie, und die in Fig. 2 gezeigte Wicklung 8 des Reed-Relais ist stromlos. Dem Prozessor wird damit über das Signal I ein Fehler gemeldet, obwohl das Magnetventil - trotz des vorliegenden Doppelfehlers - voll betriebsbereit ist. Es soll daher auch keine Fehlerabschaltung erfolgen. Dies wird durch die Anordnung der beiden Reed-Relais sichergestellt, da bei Vorliegen des geschilderten Fehlers das zwischen dem Anschluß 2 und dem Schalter 4 liegende Reed-Relais anspricht und ein entsprechendes Signal erzeugt. Das zwischen

13

dem Anschluß 3 und dem Schalter 4' liegende Reed-Relais wäre stromlos, wobei jedoch über die ODER-Verknüpfung dieses "Fehlersignal" ohne Einfluß bliebe.

Umgekehrt würde bei Masseschluß des Anschlusses 2 und gleichzeitigem Masseschluß des Pluspoles der Batterie das zwischen dem Anschluß 2 und dem Schalter 4 liegende Reed-Relais stromlos, während das zwischen dem Anschluß 3 und dem Schalter 4' liegende Reed-Relais einen Stromfluß anzeigen würde.

Die Erkennung der beiden geschilderten Arten von an sich unschädlichen Doppelfehlern kann dadurch vorgenommen werden, daß die Stromsignale I beider Reed-Relais getrennt ausgewertet werden, wobei ein Doppelfehler immer dann vorliegt, wenn das eine Signal auf hohem Pegel und das andere auf niedrigem Pegel ist. Durch eine Exklusiv-ODER-Verknüpfung kann somit dieser Fehler erkannt werden.

Alle in der Beschreibung erwähnten und in den Figuren dargestellten technischen Einzelheiten sind für die Erfindung von Bedeutung.

KNORR-BREMSE GMBH                    München, 13.9.1979
Moosacher Straße 80                  TP1/Dr.v.Bü/so
8000 München 40                      -1588-


Patentansprüche


1. Sicherheitsschaltung zur Überwachung von Magnetventilen von Fahrzeugen, insbesondere von Bremsmagnetventilen, die über eine von einem Prozessor gesteuerte Ansteuerungseinrichtung betätigt werden, wobei die Ansteuerungseinrichtung mindestens einen Schalter aufweist, der einen Anschluß des Magnetventiles mit einem Pol einer Versorgungsspannungsquelle verbindet, dadurch gekennzeichnet, daß eine Spannungsmeßeinrichtung (10) vorgesehen ist, die ständig das Vorhandensein eines Spannungsabfalles an dem Magnetventil (1) erfaßt und ein Spannungssignal (U) erzeugt, daß eine im Strompfad des Magnetventiles (1) liegende Strommeßeinrichtung (8) vorgesehen ist, die ein Stromsignal (I) erzeugt, und daß mindestens zwei im Strompfad des Magnetventiles (1) liegende PTC-Widerstände (6, 7) vorgesehen sind, von denen der eine in der Stromzuleitung und der andere in der Stromrückleitung liegt.


2. Sicherheitsschaltung nach Anspruch 1, dadurch gekennzeichnet, daß eine durch das Spannungssignal (U) betätigte Einrichtung (25 - 29) vorgesehen ist, die bei Abwesenheit eines Spannungsabfalles an dem Magnetventil den Schalter (4, 4') öffnet bzw. geöffnet hält.


3. Sicherheitsschaltung nach Anspruch 1 oder 2, dadurch gekennzeichnet, daß das Magnetventil (1) bei geöffnetem Schalter (4, 4') über einen parallel zu dem Schalter (4, 4') liegenden Widerstand (19 bzw. 31) mit einem Ruhestrom versorgt wird, der den zu erfassenden Spannungsabfall an dem Magnetventil (1) erzeugt.


- 2 -

4. Sicherheitsschaltung nach den Ansprüchen 1 bis 3, dadurch gekennzeichnet, daß der Ausgang der Spannungsmeßeinrichtung (10) galvanisch von dem Magnetventil (1) getrennt ist.

5. Sicherheitsschaltung nach Anspruch 4, dadurch gekennzeichnet, daß der Ausgang der Spannungsmeßeinrichtung (10) über einen Optokoppler (13) von dem Magnetventil (1) galvanisch getrennt ist.

6. Sicherheitsschaltung nach Anspruch 1, dadurch gekennzeichnet, daß der Ausgang der Strommeßeinrichtung (8) von dem Magnetventil (1) galvanisch getrennt ist.

7. Sicherheitsschaltung nach Anspruch 6, dadurch gekennzeichnet, daß der Ausgang der Strommeßeinrichtung über ein Reed-Relais (8) von dem Magnetventil (1) galvanisch getrennt ist, wobei die Wicklung des Reed-Relais im Strompfad des Magnetventiles liegt und der Reed-Kontakt (8') mit einem Anschluß mit einer Spannungsquelle verbunden ist und an seinem anderen Anschluß das Stromsignal (I) führt.

8. Sicherheitsschaltung nach Anspruch 1 oder 7, dadurch gekennzeichnet, daß eine über das Stromsignal (I) angesteuerte Zeitüberwachungsschaltung (11) vorgesehen ist, die den Schalter (4, 4') öffnet, wenn das einen Stromfluß durch das Magnetventil (1) anzeigende Signal länger als eine einstellbare Zeitdauer vorhanden ist.

9. Sicherheitsschaltung nach den Ansprüchen 1, 6 oder 7, dadurch gekennzeichnet, daß jeweils in der Stromzuleitung und der Stromrückleitung des Magnetventiles (1) eine Strommeßeinrichtung (8) vorgesehen ist, wobei deren Ausgänge über eine logische ODER-Verknüpfung miteinander verbunden sind.

10. Sicherheitsschaltung nach den Ansprüchen 1, 3, 4 oder 5, dadurch gekennzeichnet, daß die Spannungsmeßeinrichtung (10) folgendes enthält: einen Transistor 12, dessen Emitter mit einem Anschluß (2) und dessen Basis über einen Widerstand (23) mit einem zweiten Anschluß (3) des Magnetventiles (1) verbunden ist, wobei die Anschlüsse (2, 3) des Magnetventiles (1) über parallel zu den Schaltern (4, 4') liegende Widerstände (19, 31) mit Versorgungsspannung verbunden sind, wobei eine lichtemittierende Diode (14) des Optokopplers (13) mit dem Kollektor und der Basis des Transistors (12) verbunden ist, wobei die Anode der Diode (14) über einen Widerstand (17) mit Versorgungsspannung verbunden ist und wobei ein Opto-Transistor (15) des Optokopplers (13) mit seinem Emitter mit Masse und mit seinem Kollektor über einen Widerstand (16) mit positiver Versorgungsspannung verbunden ist, wobei der Kollektor des Opto-Transistors (15) das Spannungssignal (U) führt.

11. Sicherheitsschaltung nach Anspruch 10, dadurch gekennzeichnet, daß einer der für den Ruhestrom sorgenden Widerstände (19, 31) ein PTC-Widerstand ist.

12. Sicherheitsschaltung nach Anspruch 2, dadurch gekennzeichnet, daß die den Schalter (4, 4') betätigende Einrichtung (25 - 29) folgendes enthält: eine Reihenschaltung aus einem mit positiver Versorgungsspannung verbundenen Widerstand (28) und einem mit negativer Versorgungsspannung verbundenen Kondensator (27), wobei deren Verbindungspunkt über eine in Durchlaßrichtung geschaltete Diode (29) mit dem Ausgang der Spannungsmeßeinrichtung (10) verbunden ist und über ein invertierendes Bauteil (9') mit einem Basiswiderstand (26) eines Transistors (25), der ein den Schalter (4, 4') betätigendes Relais ansteuert.

13. Sicherheitsschaltung nach Anspruch 12, dadurch gekennzeichnet, daß das invertierende Bauteil ein NOR-Gatter (9') ist, dessen anderer Eingang ein invertiertes Ansteuersignal zur Betätigung des Magnetventiles (1) empfängt.

14. Sicherheitsschaltung nach den Ansprüchen 8, 12 und 13, dadurch gekennzeichnet, daß der Ausgang der Zeitüberwachungsschaltung (11)

mit dem Rücksetzeingang (R) eines Flip-Flops (43) verbunden ist, dessen invertierter Ausgang ($\overline{Q}$) mit einem Eingang eines ODER-Gatters (9") verbunden ist, wobei der zweite Eingang des ODER-Gatters (9") das invertierte Ansteuersignal ($\overline{A}$) empfängt.

Fig. 1

Fig. 2

0025913